# EUROPEAN PATENT APPLICATION

(11) **EP 3 951 355 A1**
(43) Date of publication of application: **09.02.2022**
(21) Application number: 21190232.5
(22) Date of filing: 07.08.2021
(51) Int. Cl.: G01N 15/14, G01N 21/65, B03C 1/01, B01L 3/00

(54) **CARTRIDGE AND DEVICE FOR DETERMINING AT LEAST THE CHEMICAL NATURE OF AT LEAST SOLID MICROPLASTIC PARTICLES SUSPENDED IN A LIQUID SAMPLE**

(30) Priority: 07.08.2020 EP 20305917; 24.03.2021 EP 21020162
(71) Applicant: Universite Gustave Eiffel, 77420 Champs-sur-Marne (FR); Centre national de la recherche scientifique, 75016 Paris (FR)
(72) Inventor: AMR EWEIS ELSAYED, Ahmed, 77420 Champs-Sur-Marne (FR); ERFAN SAYED AHMED, Mazen, 77420 Champs-Sur-Marne (FR); MARTY, Frédéric, 77700 Magny le Hongre (FR); BOUROUINA, Tarik, 94340 Joinville-le-Pont (FR); DOKLADALOVA, Eva, 77190 Dammerie les Lys (FR)
(74) Representative: A.P.I. Conseil

(57) **Abstract**

A cartridge (1) used to determine at least the chemical nature of solid microplastic particles (3) suspended in a liquid sample (4), the microplastic particles (3) having a size less than 1000 micrometers, comprising: at least one channel (21) in which the microplastic particles (3) flow, one reservoir (20) connected fluidically to the channel (21) and configured to accumulate the microplastic particles (3), an input (22) on the cartridge (1) connected fluidically to the channel (21) letting the liquid sample (4) flow through the channel (21), an output (23) on the cartridge (1) letting the liquid sample flow outside the reservoir (20) without microplastic particles (3), at least one filter (24) situated downstream the reservoir (20), allowing the trapping of the microplastic particles (3) in the reservoir (20), an alignment mark to align the reservoir (20) with respect to spectroscopy means (13), said spectroscopy means being configured to determine the chemical nature of microplastic particles (3) accumulated in the reservoir (20).

## Description

### FIELD OF THE INVENTION

The invention relates to a device for the determination of the physical properties and chemical nature of the solid microplastic particles suspended in a liquid sample.

### STATE OF ART

Research on microplastics and threats that they can represent for ecosystems and humans are only just beginning.

There are still many uncertainties related to the low number of studies on microplastics present in the nature with a size of 10-50 microns or less, which represents the detection limit of the most commonly used analytical equipment. Some experimental studies have revealed increasing concentrations of growingly smaller microplastics. In addition, the toxicity of microplastics and the relative ease with which a number of particles crossing biological barriers is expected to increase as their size decreases. This raises new concerns about microplastics.

Detection, identification, and quantification of particulate matter (such as microplastics, in particular) contaminating drinking water is an exhaustive process using the methodologies currently employed in terms of time and cost. Commonly microscopy, or chromatography is used to study microplastics.

Patent CN110320250 describes a device comprising a flow channel inlet and outlet to let water samples circulate and a capacitive sensor which is designed based on a microfluidic chip and able to count and detect microplastic particles. However, this device is not adapted to analyze the chemical composition of microplastic particles. Furthermore, the size of such device causes both a space and costs-associated problems.
Pollution of atmosphere, soils and waters, in particular due to the use of microplastics, being a global issue; there is a need to provide a device able to quickly analyze the quality of waters, in particular drinking and sea water.
The invention aims to provide such device which does not exist in the state of the art.

### SUMMARY OF THE INVENTION

The invention performs precise analysis of the particle physical properties, or it determines the chemical nature of the particles to identify whether they are made of plastics or not, and which type of plastic it is. Moreover, the invention allows automation, thus makes it faster and cheaper.

Here, the invention relates to a cartridge used to determine at least the chemical nature of at least one microplastic particle suspended in a liquid sample, said microplastic particle having a size smaller than 1000 micrometers,
the cartridge comprising:
- at least one channel in which the microplastic particles flow,
- one reservoir connected fluidically to the channel and configured to accumulate the microplastic particles,
- an input on the cartridge connected fluidically to the channel letting the liquid sample flow through the channel,
- an output on the cartridge letting the liquid sample flow outside the reservoir without microplastic particles neither any other microparticles,
- at least one filter situated downstream the reservoir, allowing the trapping of the microplastic particles in the reservoir,
- an alignment mark to align the reservoir with respect to spectroscopy means, said spectroscopy means being configured to determine the chemical nature of microplastic particles accumulated in the reservoir.

Advantageously, the reservoir has a surface area inferior to 25 mm².

The reservoir is smaller than the state of the art, allowing the concentration of microplastic particles and the ability to analyse the particles on a small surface area increasing the efficiency.

More preferably, the reservoir has a surface area between 25 mm² and 1 mm².

The surface area of the reservoir can store all the microplastic particles in a liquid sample.

Advantageously, the reservoir has a surface area between 1 mm² and 0.05 mm², and/or between 0.05 mm² and 0.01 mm².

The surface of the tank allows for faster and more accurate analysis.

Advantageously, the cartridge is in plastic.

The cartridge is made from recyclable components and can be produced in large quantities at low cost.

Advantageously, the cartridge comprises at least one microfluidic chip.

The cartridge can support multiple microfluidic chips to increase the flow rate of liquid sample processed and analysed. In addition, with the microfluidic chip it is possible to sort particles by size and add microfluidic chip functionality to the cartridge.

Advantageously, the microfluidic chip comprises the association of the alignment area and an analysis area that makes an analysis on-the-fly (real time or continuously) to determine the chemical nature of the microplastic particles during flow or when the microplastic particles are trapped in the reservoir.

Advantageously, the cartridge can be housed in a device comprising a cartridge loader, one container for the liquid sample, one container for the filtered liquid, rigid/flexible tubes to link fluidically the components, spectroscopy means and imaging means.

Then, the device sorts and traps the contaminating particles in the water according to their size in dedicated reservoirs on-chip. Trapped particles in the different reservoirs can be scanned using different spectroscopic techniques in a quick manner compared to the conventional techniques in literature which requires the scanning of relatively large-area filters then doing an additional step of estimating the size of each particle using image processing.

The same technology can also be applied to sea water and other aqueous environment for fast assessment of microplastic particles contamination right after collecting water samples.

The integration of several techniques on-chip to achieve high-throughput analysis of drinking water (regarding particle counts, shapes, sizes and chemical nature) has not been reported for realizing analysis of the particle physical properties, nor determining the chemical nature of the particles.

There is no existing solution today to satisfy the requirements of high-throughput analysis of micro-plastics in drinking water (regarding particle counts, shapes, sizes and chemical nature).

The invention provides major enhancement in the required time and cost of analysing drinking-water samples, in addition to obtaining accurate information about the contaminating particles.
Also, using MEMS technology allows low-cost production of the chips. The chips provide faster analysis of pre-concentrated water samples compared to other methodologies, where analysis of the particles during flow, or after trapping in dedicated reservoirs is possible.

The invention allows high-throughput assessment of microplastic particles pollution of waters, in particular for drinking and sea water.

### BRIEF DESCRIPTION OF THE DRAWINGS

Other advantages and characteristics of the disclosed devices and methods will become apparent from reading the description, illustrated by the following figures, where:

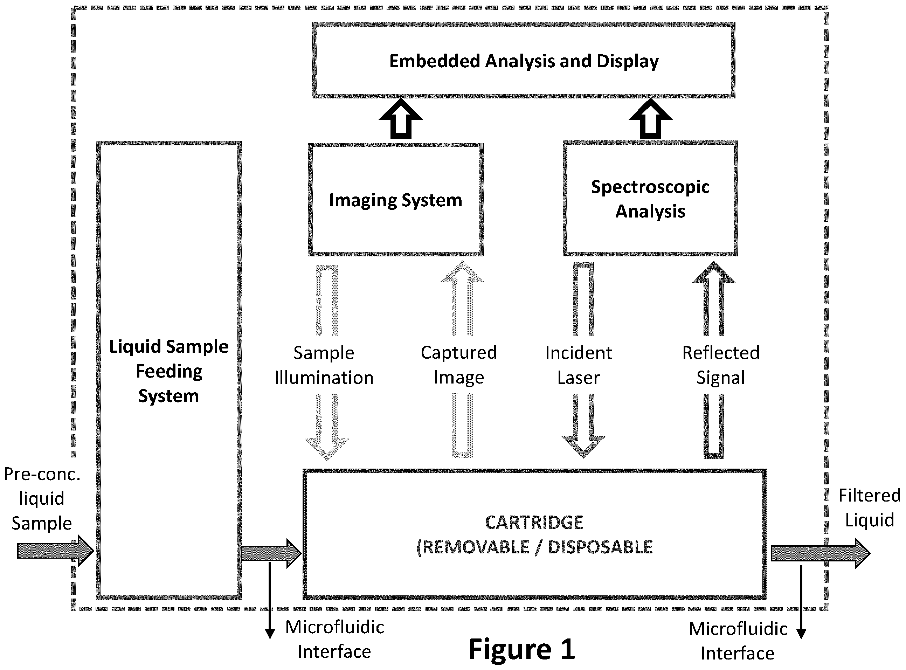

Figure 1 represents a system with a cartridge, liquid sample feeding system, an imaging system and a spectroscopy system.

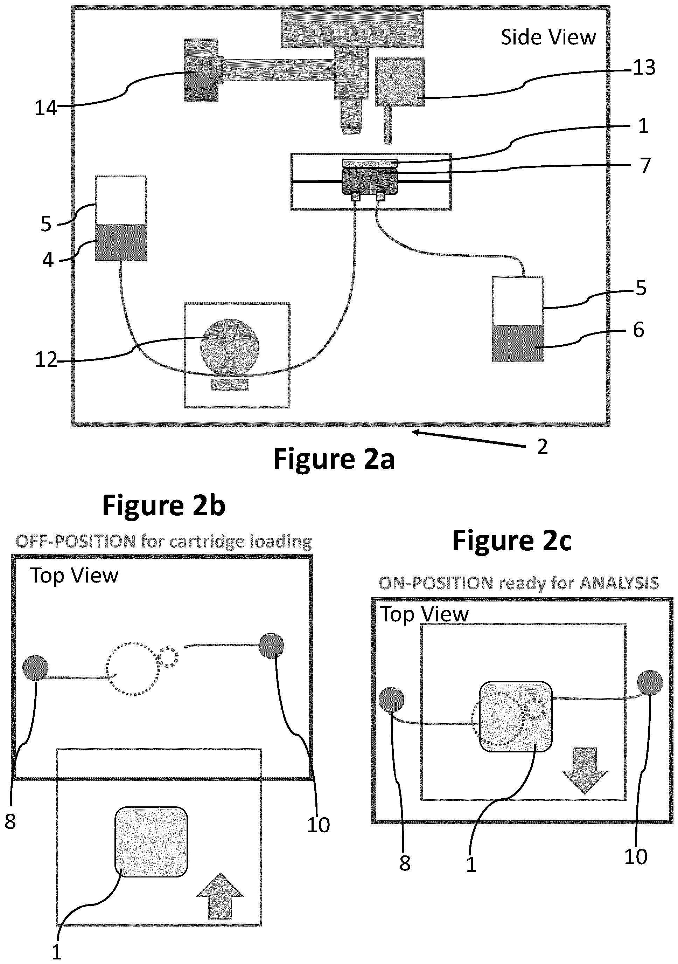

Figure 2a represents a side view of a first embodiment of the device according to the invention, the device is composed by pressure means which provide liquid sample into a cartridge loader with a cartridge to filter the liquid sample aligned under spectroscopy and imaging means.
Figure 2b represents a top view of a cartridge not loaded on a cartridge loader and two positions targeted by spectroscopy and imaging means.
Figure 2c represents a top view of a cartridge loaded on a cartridge loader with two positions targeted by spectroscopy and imaging means.

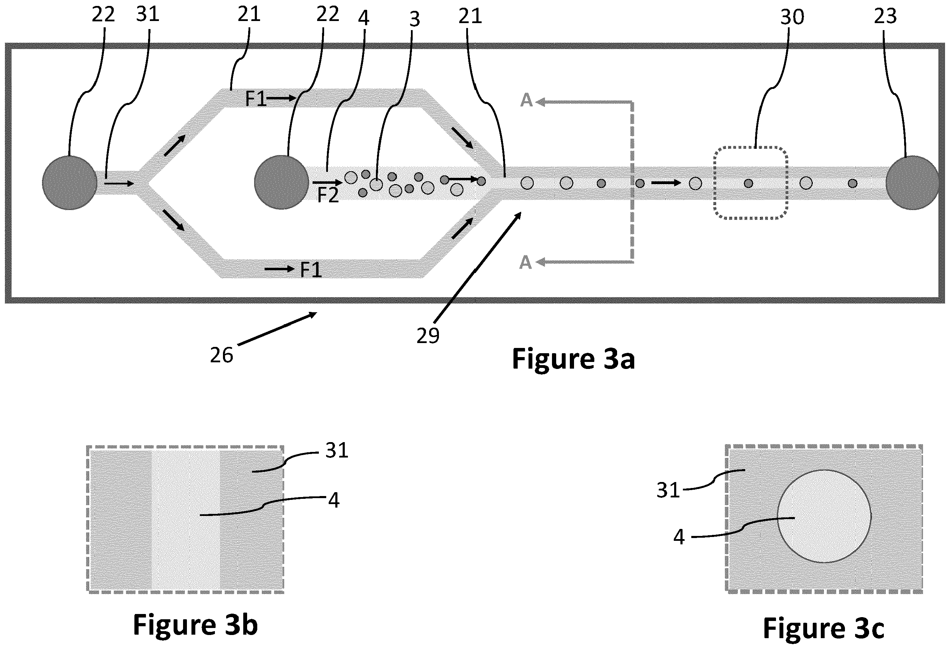

Figure 3a represents a top view of a first embodiment of the microfluidic chip according to the invention, the microfluidic chip is composed by an input of the fluid sample with microplastic particles, and a technical arrangement of channels with a first microfluidic channel having an alignment area upstream to an analysis area.
Figure 3b represents a cross-section A-A of the first microfluidic channel with a two-dimensional implementation, wherein the technical arrangement of channels realizing a part of cytometer with a focusing fluid that surrounds the liquid sample with microplastic particles from the sidewalls only, so as to align the microplastic particles with each other along the flow path.
Figure 3c represents a cross-section A-A of the first microfluidic channel with a three-dimensional implementation, wherein the technical arrangement of channels realizing a part of cytometer with a focusing fluid that encapsulates the liquid sample from all sides so as to align the microplastic particles with each other along the flow path.

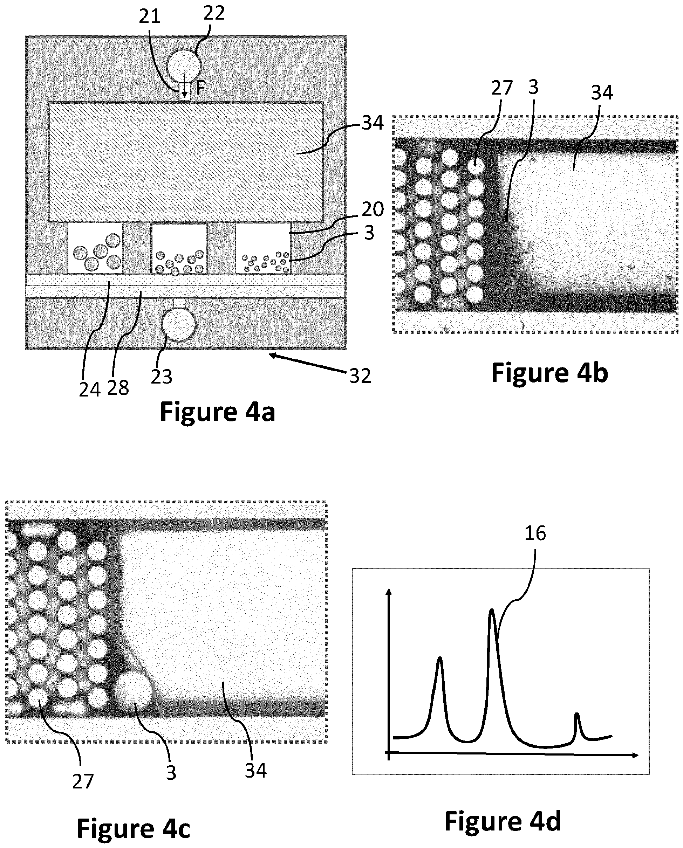

Figure 4a represents a top view of a second variant of the microfluidic chip according to the invention, with a structure of a sorter chip according to the invention comprising a separation area for sorting the microplastic particles which are present in the liquid sample.
Figure 4b is a microscope image showing a filter array and a reservoir housing with trapped microplastic particles close to 10µm in size.
Figure 4c is a microscope image showing a filter array and a reservoir housing with trapped microplastic particles close to 80µm in size.
Figure 4d represents an example of a result graphic obtained with the use of the spectroscopy applied on the microplastic particles trapped in the reservoirs.

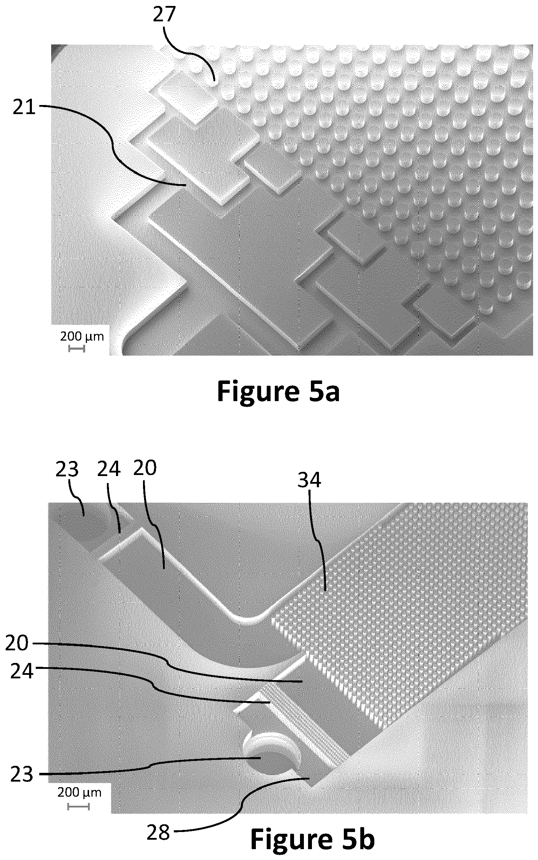

Figure 5a is a microscope image showing a bifurcated-tree water sample input linked to an array of elements engraved on chip, to separate the microplastic particles, before the trapping in the filters. The figure 5a represents the entrance or beginning of the sorter.
Figure 5b is a microscope image showing an array of elements engraved on microfluidic chip to separate the microplastic particles, connected fluidically downstream to filters which are connected fluidically downstream to fluid output. The figure 5b is the end of the sorter.

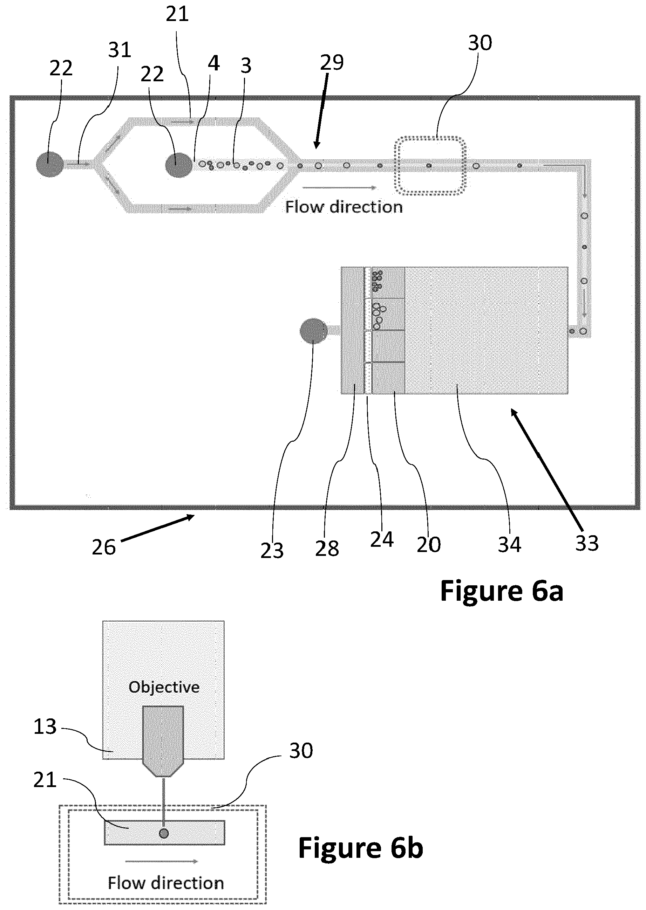

Figure 6a represents a third variant of the microfluidic chip which combines on the microfluidic chip, the first variant and the second variant of the microfluidic chip such as an alignment area and an analysis area fluidically connected upstream to a sorter.
Figure 6b represents a cross section of the first microfluidic channel system with an objective to make spectroscopic analyses for microplastic particles in liquid sample.

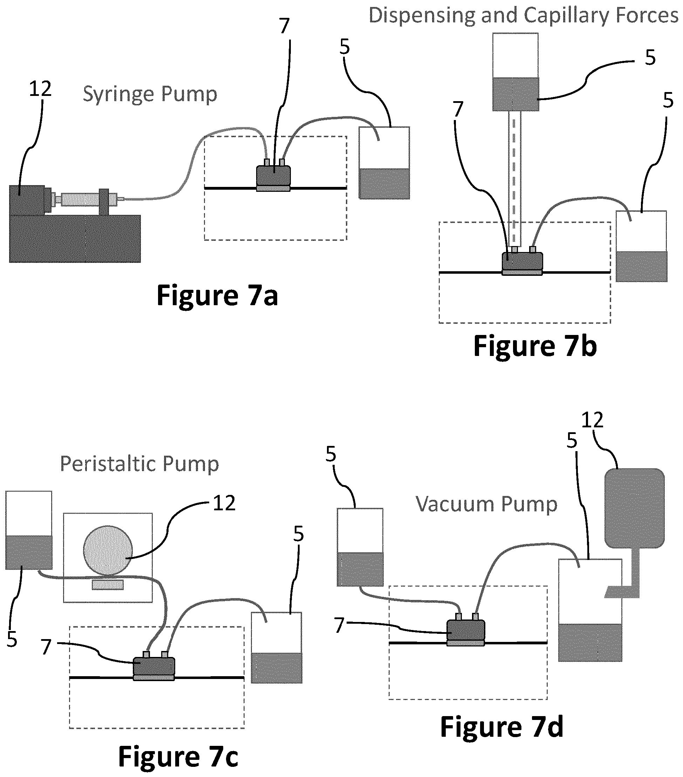

Figure 7a represents a side view of a cartridge loader linked to syringe pump and a container.
Figure 7b represents a side view of a cartridge loader linked to a first container delivering liquid sample by dispensing and capillary forces and a second container retrieving filtered liquid sample.
Figure 7c represents a side view of a cartridge loader linked to a first container delivering liquid sample by a peristaltic pump and a second container retrieving filtered liquid sample.
Figure 7d represents a side view of a cartridge loader linked to a first container delivering liquid sample by a vacuum pump and a second container retrieving filtered liquid sample.

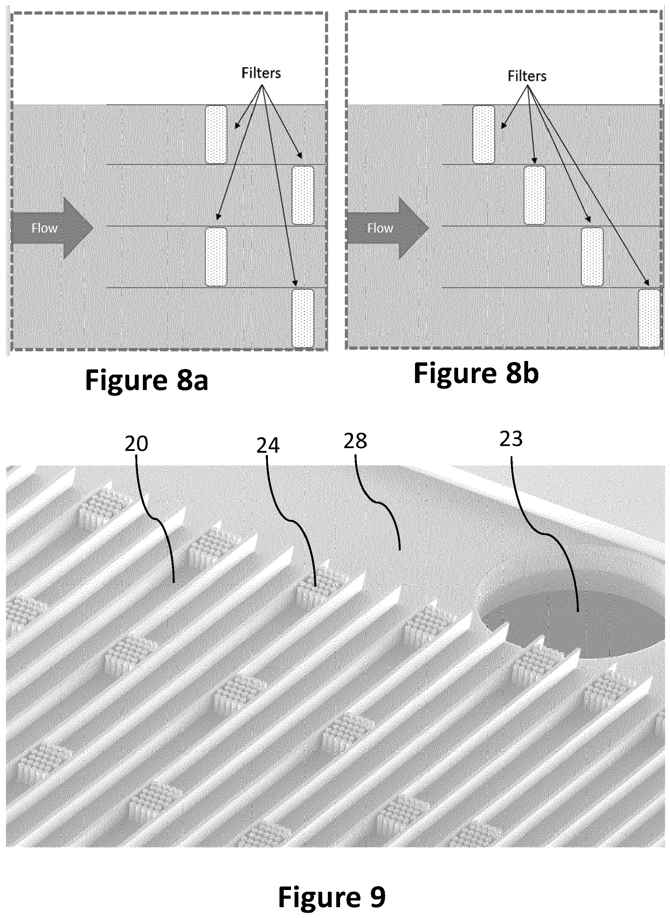

Figure 8a represents an architecture for filters present in reservoirs formed by the channels.
Figure 8b represents another architecture for filters present in reservoirs formed by the channels.
Figure 9 represents a microscope image on a downstream part of a chip, with filters present in reservoirs and an output for water without microplastic particles.

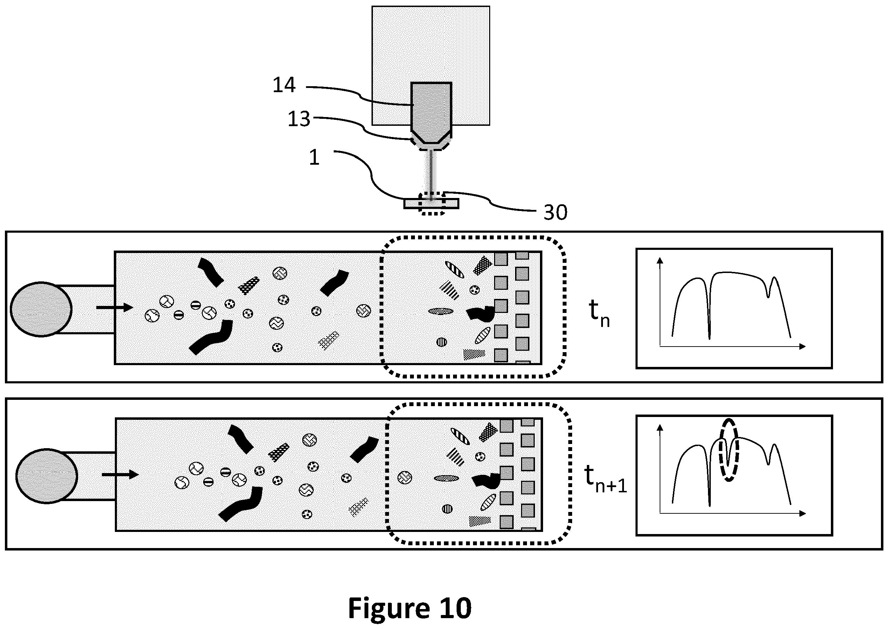

Figure 10 represents differential measurements where two consecutive images in times tₙ and tₙ₊₁ are presented where the imaging zone is depicted by a dashed contour line. The top views of the cartridge and the corresponding images of the analysis area are shown on the centre of the two bottom figures while the measured synchronized spectra are shown on the right side of those two bottom figures, demonstrating the appearance of a new spectroscopic peak attributed to the arrival of a new microplastic particle, which is also acquired on the image of the analysis area.

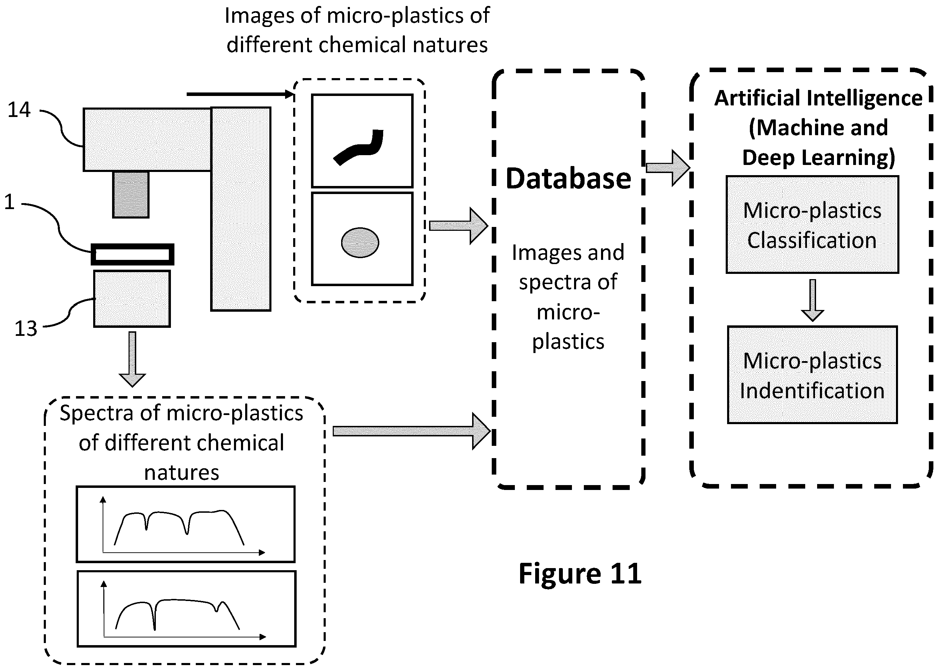

Figure 11 represents a measurement system with imaging means, spectroscopy means, and a cartridge where the synchronized images and spectra, are saved in a database to develop and learn artificial intelligence models for the purpose of classification and identification of the different kinds of microplastics, with the ultimate objective of predicting the different kinds of microplastics solely based on image information and related processing.

### GENERAL DESCRIPTION

The invention is about a cartridge 1 and a device 2 having this cartridge 1, used to determine the physical properties and/or the chemical nature of at least the solid microplastic particles 3 suspended in a liquid sample 4, the microplastic particles 3 having a size less than 1000 micrometers each, whatever their shape.

Advantageously, but not in limited way, the liquid sample 4 can be pre-concentrated before its passage in the cartridge 1. It can be extracted from a drinking water bottle and comprises all the solid microplastic particles 3 contained in the drinking water bottle. For instance, for 1 mL, it can have tens to thousands of microplastic particles 3, and advantageously hundreds to thousands of solid microplastic particles 3.

For instance, the solid microplastic particles 3 can be one of these types of plastics: PMMA, PS, PP, PE, PA, PVC, PTFE, PET, Nylon or others.

Solid microplastic particles have a rigidity such that the particles do not deform on contact with a solid element

### 1. Device

The device 2 comprises:
- at least one first container 5 for the liquid sample 4 with microplastic particles 3,
- at least one second container 5 for the filtered liquid sample 6,
- a cartridge loader 7 which is able to mechanically host the cartridge 1, the cartridge loader 7 presenting water supplying means 8 able to be connected fluidically to the input 22 of the cartridge 1 when the cartridge 1 is loaded in the cartridge loader 7, and water evacuation means 10 able to be connected fluidically to the output 11 of the cartridge 1 when the cartridge 1 is loaded,
   the water supplying means 8 of the cartridge loader 7 is linked fluidically to the first container 5 and the water evacuation means 10 is linked fluidically to the second container 5,
- pressure means 12 to circulate the liquid sample 4 into the cartridge loader 7, the cartridge 1 connected fluidically to the cartridge loader 7, the filtered liquid sample 6 being then evacuated up to the filtered liquid container 5,
- spectroscopy means 13 and/or imaging means 14 (example 1) to analyse the microplastic particles 3 accumulated in the reservoir 20 of the cartridge 1 loaded in a predefined position.

The pressure means 12 can be for instance a syringe pump or peristaltic pump or a vacuum pump. Examples of « internal pressure means » can also be for instance the capillary suction force, which does not require any apparatus.

The device 2 can comprise some imaging means able to detect the alignment mark which aligns the reservoir 20 with respect to spectroscopy means 13.

The spectroscopy means can be a Raman spectroscopy, FTIR spectroscopy, UV-Vis spectroscopy or Fluorescence spectroscopy (example 2).

Advantageously, spectroscopy means are configured to determine each solid microplastic particle which is composed of one of these types of plastics: PMMA, PS, PP, PE, PA, PVC, PTFE, PET, Nylon or others.

Advantageously, the spectroscopy means 13 and/or imaging means 14 analyse and image when the microplastic particles 3 are accumulated in the reservoir 20 ; and/or analyse and image on the flow when a microplastic particle 3 arrived in the reservoir 20.

Advantageously, the spectroscopy means 13 and/or imaging means 14 analyse and image also when the microplastic particles 3 passed through the channel 21.

The invention can realize three imaging and analysis:
(i) all the particles accumulated in the reservoir 20;
(ii) each particle which arrive one after the other in the reservoir just before they are stopped in the reservoir by the filter;
(iii) each particle which arrive one after the other in the channel just before they arrived in the reservoir.

So the invention present small reservoirs (and also the small channels) to make the analysis faster than conventional techniques used in microplastics analysis. The small reservoirs of the present invention localize the particles of the sample in a small area which enables great improvement in analysis time (compared to alternative state-of-the-art conventional methods used for microplastics) as highlighted in the table below taken from the publication: [Ahmed A. Elsayed et al., "A microfluidic chip enables fast analysis of water microplastics by optical spectroscopy", Scientific Reports 11, 10533 (2021)].

As the reservoirs of the present invention are very small, the accumulated (and concentrated) microplastic particles are detected thanks to the alignment mark which spots the microplastic particles, the analysis is very fast and accurate.

A continuous analysis is only possible because the invention presents an evacuation area for the liquid sample (for example a water sample).

Thus, the invention allows acquiring a time series of multiple consecutive images and multiple consecutive spectra at multiple time intervals.
The water supplying means 8 and/or water evacuation means 10 can be flexible or rigid tubes.
The water supplying means 8 and/or water evacuation means 10 can be channels directly realized on the surface of the cartridge loader which can be connected fluidically to the channel of the cartridge in which the microplastic particles flow, when the cartridge is in the cartridge loader .

Advantageously, some imaging means are able to detect an alignment mark which aligns the reservoir 20 with respect to spectroscopy means 13.

Advantageously, the imaging means can comprise an external digital camera, which can be a high-speed camera, to image the microplastic particles 3 in the liquid sample 4 during their flow or to image the microplastic particles 3 trapped or to detect an alignment mark.

Advantageously, the spectroscopy means 13 can comprise a Raman spectroscopy, FTIR spectroscopy, UV-Vis spectroscopy or Fluorescence spectroscopy analysis to determine the chemical nature (plastic composition) of the microplastic particles 3 during flow or when the microplastic particles 3 are trapped.
These spectroscopy means 13 and imaging means 14 can give some data and result graphic 16. These results can give a chemical or physical property with a spectrum, where the data can be extracted based on further analysis of this kind of graphic 16.

Advantageously, the spectroscopy means 13 are mini or micro spectrometer.

Advantageously, the imaging means are able to image the microplastic particles 3 and determine the physical nature of the microplastic particles 3.

Advantageously, calculating means linked to spectroscopy means 13 are configured to count the number of microplastic particles 3 for each different plastic detected.

Advantageously, the cartridge loader 7 comprises a housing adapted to receive the cartridge 1, the dimension of the cartridge 1 fitting within the dimension of the housing.

Advantageously, the device 2 comprises displacement means to align and displace the cartridge 1 relative to the spectroscopy means 13. The displacement means can install, align and remove the cartridge 1 in/out of the housing. The displacement means align the cartridge 1 automatically with an alignment mark and the imaging means 14 which detect the alignment mark.

The displacement means can be a motorized table. In one realization the displacement means and the cartridge loader 7 can be the same embodiment.

The pressure means 12 should be turned off during the insertion of the cartridge 1. One way to prevent leakage during operation is the use of rubber o-rings on the inputs/outputs of the cartridge 1.

Another way to prevent leakage during operation is the use of a spring-loaded platform that can be pushed down to receive the cartridge 1, so that when the cartridge 1 is loaded water flows through the cartridge 1 but when the cartridge 1 is removed the platform is raised by the spring to block the water flow.

In one embodiment, the device 2 comprises displacement means allowing the cartridge 1 to be placed in the housing and to be removed out of the housing, the displacement means are configured to move the cartridge 1 in at least one direction.
In another embodiment, the displacement means are configured to move the cartridge 1 in at least two directions.

Advantageously, the displacement means comprise a stepper motor able to move the cartridge 1 to the needed position under the camera or the spectroscopy means 13, or even actively move the cartridge 1 under the fixed imaging/spectrometry means to perform scanning of the microplastic particles trapped in the cartridge 1.

Advantageously, the function of the stepper motor is to move the cartridge 1 to the needed position under the camera or the spectroscopy means 13, or even actively move the cartridge 1 under the fixed imaging 14/spectrometry means 13 to perform scanning of the reservoirs 20 in the cartridge 1.

The device 2 can comprise attachment means to fix the cartridge 1 to the displacement means.

In another embodiment, the spectroscopy means 13 and/or the imaging means 14 are moveable relative to the cartridge 1.

Advantageously, the device 2 can comprise an objective lens for optical spectroscopic analysis, a high-speed camera, or other particle analysis instruments.

The cartridge 1 can be made at least partially of plastic, silicon, glass, or other material, and top-sealed with glass, PDMS or any other optically transparent material.

Advantageously, the device 2 comprises imaging means at the analysis area in order to acquire in real time, a series of images or videos for microplastic particles flowing and getting trapped into the reservoir, working in synchronization with the spectroscopy means,
and the device 2 presents a dedicated software analysing the acquired synchronized spectra and images/videos to map the evolution in the acquired spectra to the newly flowing particles into the reservoir with the help of the synchronized images/videos.

Advantageously, in the device 2:
- the pressure means sustain a continuous flow of the liquid sample 4, the cartridge 1 traps the microplastic particles 3 in the analysis area 30, where the spectroscopy means 13 and the imaging means 14 are configured to achieve, with a certain time step interval, a series of synchronous acquisitions of image frames and optical spectra, both information being triggered by the event of the arrival of new microscopic particle ;
- the identification and classification of a new microscopic particle is based on the differential comparison of the current spectrum to the precedent one acquired in the previous time step, and on the differential comparison of the current image to the precedent one acquired in the previous time step, those comparisons being done simultaneously for the purpose of taking into account the correlation between both information related to the same event ;
- the dedicated analysing software is configured to process the series of images and spectra for the purpose of getting the information such as shape, size, colour and chemical nature of all newly arriving particles to the reservoir 20 ;
- following the analysis of a microplastic particle 3, there are two possible cases:
   - the appearance of a new spectroscopic peak in the differentiated spectra which implies the detection of a new microplastic material, or
   - the increase in strength of an existing spectroscopic peak implies the detection of a new particle with a similar material already identified for other particles that have previously arrived in the reservoir 20.

Advantageously, said dedicated analysing software is configured to identify said appearance of a new spectroscopic peak or said increase in strength of an existing spectroscopic peak.

Advantageously, the information about the chemical nature will be retrieved without any spectroscopy means, solely based on image analysis thanks to learning from a former dataset gathering both image and spectroscopy information and the robust correlation between both types of information.

Advantageously, the imaging and spectroscopy means are placed and acquiring their signal from the same side with respect to the cartridge while another architecture could be with placing them in two different sides (Top & Bottom or Right & Left) with respect to the cartridge.

### 2. Cartridge

In this embodiment, the cartridge 1 comprises:
- at least one channel 21 in which the microplastic particles 3 flow,
- one reservoir 20 connected fluidically to the channel 21 and configured to accumulate the microplastic particles 3,
- an input 22 on the cartridge 1 connected fluidically to the channel 21 letting the liquid sample 4 flow through the channel 21,
- an output 23 on the cartridge 1 letting the liquid sample flow outside the reservoir 20 without microplastic particles 3,
- at least one filter 24 situated downstream the reservoir 20, allowing the trapping of the microplastic particles 3 in the reservoir 20,
- an alignment mark to align the reservoir 20 with respect to spectroscopy means 13 able to determine the chemical nature of microplastic particles 3 accumulated in the reservoir 20.
Advantageously, the cartridge 1 has several reservoirs 20 and several filters.

The reservoir 20 can have a surface area comprises between 25 mm² and 1 mm² or can have a surface area comprises between 1 mm² and 0.01 mm².

The channel 21 and the reservoir 20 are closed so that the liquid sample 4 during flow from the input 22 to the output 23 is protected from the surrounding air of the outside environment of the cartridge 1.

The filter 24 can comprise patterns realized on the cartridge 1.
These patterns can comprise an array, or a line of elements 27 realized on the cartridge 1, the patterns can stop the microplastic particles 3 to let the water sample exit without microplastic particles 3.

These patters can have a period ranging from a fraction of a micron to ten of microns, with one row or more of elements 27. For a linear pattern (one row) the density can be in the range of tens to thousands of elements 27 per 1 mm.

In one realisation, the filters can consist of an array, or a line, or elements realized and disposed according to a pattern of a line or array on-cartridge.
In another realisation, the patterns are chosen among the list: an array, a line, a pillar-type or a cross flow, consisting of obstacles of different shapes like circles, cylinders, squares or rectangles.

The solid microplastic particles 3 are stopped in the reservoir 20 from the first line of the filter, for their analysis by spectroscopy means and imaging means. The solid microplastic particles 3 are analysed only in the reservoir, and not in the filter, which allows an analysis without filtering the image of the filter.

The reservoir 20 is dedicated to the accumulation of the solid particles and to analyse them. The reservoir 20 serves only to the spectroscopy means and/or imaging means.

The particles are not imaged or analysed in the filter.

Advantageously, the cartridge 1 comprises an evacuation area 28 to let water flow without microplastic particles 3 until the output.

The cartridge 1 can comprise channels 21 with width sizes inferior to 5 millimetres.

The cartridge 1 can be milli-fluidic.

Advantageously, the flow of the fluid sample 4 is continuous, and the flow of the fluid can be stopped when the reservoir 20 is filled.

Advantageously, the cartridge 1 has the following performance which is high through put in comparison of the device of the state of the art which analyses the contamination of microplastics :
- typical flow-rate values in the order of tens of micro-litre per minute, up to tens of milli-litres per minute ;
- the typical time necessary to flow the whole sample in the cartridge can be in the order of tens of seconds, up to tens of minutes ;
- the typical time to make analysis by spectroscopy means or imaging means can be from one second to 1 minute.

### 2a) Cartridge made of plastic

In this embodiment, the cartridge 1 can be fabricated (moulding) using conventional technologies and corresponding materials used for the fabrication of water filters, which includes plastic materials for instance.

### 2b) Cartridge which comprises the microfluidic chip in silicon

In this embodiment, the cartridge 1 comprises a microfluidic chip 26. The filtering of the water sample 4 is managed by the microfluidic chip 26.

In this embodiment, the cartridge 1 can comprise one support for housing the microfluidic chip 26 and configured to bring the microplastic particles 3 flow in the microfluidic chip 26, by one support entrance channel which is aligned with the channel 21 of the microfluidic chip 26 and one support exit channel which is aligned with the output 23 of the microfluidic chip 26.
In this embodiment, the microfluidic chip 26 can be used for one filtering and after changed, by another microfluidic chip 26. Thus, the cartridge 1 is recyclable.

Advantageously, the microfluidic chip 26 recovers the microplastic particles 3 contained in the water thanks to a filter 24 and a reservoir 20, and the microfluidic chip 26 is placed directly underneath the spectroscopy means 13 and the imaging means 14 in order to analyse the microfluidic chip 26 content.

In one variant of the embodiment, the microfluidic chip 26 and the cartridge 1 are realized in one single material, i.e., realized at the same time and form one piece.
In this embodiment, the cartridge 1 is a support having a microfluidic chip 26 and permitting to displace the microfluidic chip 26 more easily.
The size of the cartridge 1 is larger than the size of the microfluidic chip 26, in order to allowing a more efficient and precise use of the microfluidic chip 26.

In this embodiment, the cartridge 1 is thrown after the use, then another cartridge 1 can be loaded.

Advantageously, a filter 24 catches in the reservoir 20 the microplastic particles 3 contained in the water and the microfluidic chip 26 is placed directly underneath the spectroscopy means 13 and the imaging means 14 in order to analyse the microfluidic chip 26 content.

### Microfluidic chip with the sorter

In a first variant of the microfluidic chip 26, the microfluidic chip 26 comprises a sorter 32 which allows the separation of the microplastic particles 3 according to their size and/or shape and connected fluidically to the input 22, with:
- a sorting chamber 33 which comprises the filter 24 and is connected fluidically to the channel 21 with a separation area 34 upstream the filter 24, so as to allow the separation of the microplastic particles 3 before their trapping in the filter 24,
- the filter 24 comprises first patterns realized on the cartridge 1,
- the separation area 34 comprises second patterns realized on the cartridge 1,
   second patterns having a gap superior to the gap of the first patterns, the first gap being inferior to the size of the microplastic particles 3 to filter,
- an evacuation area 28 situated downstream the filter 24 and connected to the output 23.

Advantageously, the filter 24 is downstream to the separation area 34 in the sorting chamber 33.

The evacuation area 28 lets water flow without microplastic particles 3 until the output 23.

In a derivative form, the sorting chamber 33 comprises series of filters 24 to trap the microplastic particles 3 already sorted, with different stop areas, to accumulate the sorted microplastic particles in the microfluidic chip 26 according to their size.

Advantageously, the sorter 32 comprises a sorting chamber 33 and an evacuation area 28. The sorting chamber 33 comprises a separation area 34 and the filters 24 upstream the evacuation area 28. The separation area 34 comprises patterns engraved and stop areas created by the filters 24.

The filters 24 can comprise two patterns: first patterns situated downstream the separation area 34, the separation area 34 having second patterns, second patterns having a gap superior to the gap of the first patterns, which can be in the order of few micrometers or tens of micrometers, for instance.

The gap determines the spatial distance between two elements engraved 27 on chip of the same patterns or filters 24.
The filters 24 can be on the separation area 34 and reservoirs 20.

Advantageously, the filters 24 with the first patterns can stop the microplastic particles 3 to let the water sample exit without microplastic particles 3.

Advantageously, the filters 24 with the second patterns can stop a part of microplastic particles 3 according to their size and can let small particles pass according to the periodicity/density.

The gap of the patterns of the sorting section depends on the target particle size, for our application this gap can range from 25 to 250 micrometres.
The trapped microplastic particles can be contained in different reservoirs 20 depending on the size of microplastic particles 3.

Advantageously, each filter 24 is spatially shifted with respect to the adjacent filters, to enable optical spectroscopic analysis of the trapped microplastic particles 3, without having an interfering optical signal from adjacent filters.

Each reservoir 20 can have an output after the filters 24, or each reservoir 20 can be connected to the same output 23.
An evacuation area 28 can be situated downstream each filter 24.

The first microfluidic channel 21 delivering the water sample 4 can be a single channel, a bifurcated-tree input, or other inputs.

The microfluidic chip 1 can comprise a passive sorter 32 using technique to separate microplastic particles spatially on-chip in the separation area 34, chosen among the list:
- Pinching Flow Fractionation,
- Deterministic Lateral Displacement,
- Field Flow Fractionation,
- Cascaded filtering on-chip,
- or another conventional technique for sorting micro-scale plastic particles.

In a second variant of the sorter 32, the microfluidic chip 26 comprises an active sorter using the same techniques mentioned below to separate microplastic particles 3 spatially on-chip in the separation area 34 chosen coupled with electrical / electromagnetic means to separate the microplastic particles 3.

### Microfluidic chip with the alignment area and the analysis area

In a second variant of the microfluidic chip 26, the microfluidic chip 26 comprises a fluidic channel 21 in which the microplastic particles 3 flow, comprising: an alignment area 29 and an analysis area 30, the analysis area 30 corresponding to the reservoir 20 of the cartridge 1.

The alignment area 29 can comprise a serpentine part.

Advantageously, the alignment area 29 and the analysis area 30, are configured with:
- a first section with an input 22 for the water sample 4 and an input 22 for a focusing fluid 31 both being connected fluidically to a second section,
- the second section, which is the fluidic channel 21 enabling the flow of single microplastic particles, flowing sequentially one behind another and where the focusing fluid surrounds the water sample fluid 4, the width of the water sample 4 being adjustable by changing the flow rates of the focusing fluid 31 and water sample fluid 4,

The microfluidic chip 26 is configured to realize a two-dimensional implementation in which the focusing fluid 31 surrounds the water sample 4 from the first microfluidic channel 21 sidewalls only or a three-dimensional implementation in which the focusing fluid 31 encapsulates the water sample 4 from all sides in the first microfluidic channel 21.
The alignment area 29 can be a microflow cytometer.

The microfluidic chip 26 can be configured so that each microplastic particle is imaged individually as it passes through the analysis area 30 or can be configured so that multiple microplastic particles 3 are imaged as they pass through the analysis area 30.

### Microfluidic chip which combines the sorter, the alignment area and the analysis area.

In a third variant of the microfluidic chip 26, the microfluidic chip 26 comprises the sorter 32 on the one hand, the alignment area 29 and the analysis area 30 on the other hand.

The microfluidic chip 26 can have different structures depending on the combination of these three components: the sorter 32, the alignment area 29 and the analysis area 30.

The three components can be disposed in such way:
- the alignment area 29 upstream to the sorter 32,
- the analysis area 30 within or near the alignment area 29, or within the sorter 32, near the filters 24.

Advantageously, the microfluidic chip 26 can comprises an intermediary chamber between the first component and the second component to regulate the flow rate of the water sample 4 and other fluid which can be used, between the first two components which are the alignment area 29 and the sorter 32.

All the embodiments can have one of the three variants of the microfluidic chip 26.

Another aspect of the invention is the use of one of the different embodiments.

Any embodiment of the present invention can be used with a preconcentrated liquid sample 4, with hundreds to thousands of microplastic particles 3 per ml pre-concentrated liquid sample 4.

For 1 mL, it can have tens to thousands of microplastic particles 3, and advantageously hundreds to thousands of microplastic particles 3.

**Example of use :**

| | | | | | |
|---|---|---|---|---|---|
| Conventional techniques in the literature for analysing microplastics | | Analysis time for a pre-concentrated sample of 500µL | Flow of the invention | Micro-optofluidic chip of the invention | |
| Manuel inspection and FTIR analysis | Automated analysis pipeline with focal plane array (FPA) | | ∼ 15 min | Fluid Injection : 12 min | |
| 720-900 min | 2320 min | | | FTIR scanning : <7 min | Raman spectral averaging : < 2 min |
| | | | | Total < 20 min | Total < 14 min |

The study performed in this reference *(*Primpke, S., Lorenz, C., Rascher-Friesenhausen, R. & Gerdts, G. An automated approach for microplastics analysis using focal plane array (FPA) FTIR microscopy and image analysis. Anal. Methods 9, 1499-1511 (2017*))* was on a marine sediment but the spectroscopic analysis process is identical and appropriate for drinking water samples after sample preparation steps.

The microfluidic chip is first filled with the pre-concentrated sample of a 500 µL at a flow rate of nearly 42 µL/min, corresponding to the injection time is less than 12 minutes.

For a typical chip whose unit reservoir size is 300 µm wide and 1 mm long, the total area of 20 reservoirs, each for different particle sizes, is 6 mm2, which is 2 orders of magnitude smaller than the area of a standard filter of diameter 25.4 mm, hence if the latter requires 10 hours for FTIR scanning, then the micro-optofluidic chip (the cartridge 1) can be scanned in less than 7 minutes.

Assuming a relatively long averaging time to have an excellent signal (5 seconds per reservoir) for the Raman spectral, and a 1 mm2 laser spot, then the total should be less than 2 minutes (20 reservoirs with 5 seconds each = 100 seconds or 1.67 minutes).

The small reservoirs 20 of the present invention localize the particles of the sample in a small area which enables great improvement in analysis time (compared to alternative state-of-the-art conventional methods used for microplastics) as highlighted in the table below taken from our following publication: *[*Ahmed A. Elsayed et al., "A microfluidic chip enables fast analysis of water microplastics by optical spectroscopy", Scientific Reports 11, 10533 (2021*)].*

As the reservoirs 20 of the present invention are small, the accumulated (and concentrated) microplastic particles 3 are detected thanks to the alignment mark, the analysis is very fast and accurate, compared to the state of the art to the device for analysing the microplastic particles.

The present invention also concerns a use of the with a preconcentrated liquid sample 4 of water or liquid food or beverage, such as drinking water or sea water, with hundreds to thousands of solid microplastic solid particles 3 per ml pre-concentrated liquid sample 4 for 1 mL, advantageously hundreds to thousands of microplastic solid particles 3.

In the present invention there can be a preconcentration of microplastic particles 3 in the liquid sample 4 of water, then a second concentration of the microplastics particles in the small reservoir 20, which allows the analysis of the water contamination to be very fast, in comparison to the device of the state of the art.

## Claims

1. A cartridge (1) used to determine at least the chemical nature of at least one solid microplastic particle (3) suspended in a liquid sample (4) for detecting micro-plastics contamination in the liquid sample (4),
the solid microplastic particles (3) having a size less than 1000 micrometers,
the cartridge (1) comprising:
• at least one channel (21) in which the solid microplastic particles (3) flow;
• one reservoir (20) connected fluidically to the channel (21) and configured to accumulate the solid microplastic particles (3) during the flow,
the reservoir (20) has a surface area inferior to 25 mm² and advantageously inferior to 1 mm² such as 0.01 mm²,
the channel (21) having width sizes inferior to 5 millimetres and advantageously inferior to 1 millimetre ;
• an input (22) on the cartridge (1) connected fluidically to the channel (21) letting the liquid sample (4) flow through the channel (21) ;
• an output (23) on the cartridge (1) letting the liquid sample flow outside the reservoir (20) without solid microplastic particles (3) ;
• at least one filter (24) situated downstream the reservoir (20), allowing the trapping of the solid microplastic particles (3) in the reservoir (20), by stopping the solid microplastic particles (3) in the reservoir (20) situated upstream the filter (24), and by letting the liquid sample (4) exit without solid microplastic particles (3) ;
• an evacuation area (28) to exit the the liquid sample (4) without solid microplastic particles (3), situated downstream the filter (24) and connected to the output (23) ;
• an alignment mark to align the reservoir (20) with respect to spectroscopy means (13), said spectroscopy means (13) being configured to analyse the reservoir (20) where the solid microplastic particles (3) arrive and therefore determine the chemical nature of solid microplastic particles (3) accumulated in the reservoir (20).

2. The cartridge (1) of claim 1, wherein the cartridge (1) comprises several reservoirs (20) and several filters (24).

3. The cartridge (1) of claims 1-2, wherein the reservoir (20) has a surface inferior to 0.05 mm² such as 0.01 mm².

4. The cartridge (1) of claims 1-3, wherein the filters (24) are spatially shifted with respect to the adjacent filters, to enable optical spectroscopic analysis of the trapped solid microplastic particles (3), without having an interfering optical signal from adjacent filters (24).

5. The cartridge (1) of claims 1-4, wherein the channel (21) and the reservoir (20) are closed so that the liquid sample (4) during flow from the input (22) to the output (23) is protected from the surrounding air of the outside environment of the cartridge (1).

6. The cartridge (1) of claims 1-5, wherein the filter (24) being patterns realized on the cartridge (1).

7. The cartridge (1) of claims 1-6, wherein the cartridge (1) is made of plastic.

8. The cartridge (1) of claims 1-7, wherein the cartridge (1) comprises at least one microfluidic chip (26) in silicon for filtering the solid microplastic particles (3) having a size less than 200 micrometers.

9. The cartridge (1) of claim 8, wherein the microfluidic chip (26) comprises the fluidic channel (21) in which the solid microplastic particles (3) flow, with : an alignment area (29) and an analysis area (30) with spectroscopy means and/or imaging means which target the flow of the solid microplastics particles (3) in the fluidic channel (21).

10. The cartridge (1) of claims 8-9, wherein the microfluidic chip (26) comprises a sorter (32) which allows the separation of the solid microplastic particles (3) according to their size and/or shape and connected fluidically to the input (22), with:
• a sorting chamber (33) which comprises the filter (24) and is connected fluidically to the channel (21) with a separation area (34) upstream the filter (24), so as to allow the separation of the solid microplastic particles (3) before their trapping in the filter (24) ;
• the filter (24) comprises first patterns realized on the cartridge (1) ;
• the separation area (34) comprises second patterns realized on the cartridge (1),
second patterns having a gap superior to the gap of the first patterns, the first gap being inferior to the size of the solid microplastic particles (3) to filter (24) ;
• an evacuation area (28) situated downstream the filter (24) and connected to the output (23) ;
• the filter (24) is downstream to the separation area (34) in the sorting chamber (33).

11. A device (2) used to determine at least the chemical nature of at least the solid microplastic particles (3) suspended in a liquid sample (4), for detecting the microplastic particles contamination in the liquid sample (4),
the device (2) comprising:
• at least one first container (5) for the liquid sample (4) with solid microplastic particles (3) ;
• at least one second container (5) for the filtered liquid sample (6) ;
• a cartridge loader (7) which is able to mechanically support the cartridge (1) of any claims 1-10, the cartridge loader (7) presenting water supplying means (8) able to be connected fluidically to the input (22) of the cartridge (1) when the cartridge (1) is loaded on the cartridge loader (7), and water evacuation means (10) able to be connected fluidically to the output (23) of the cartridge (1) when the cartridge (1) is loaded,
• the water supplying means (8) are linked fluidically to the first container (5) and the water evacuation means (10) are linked fluidically to the second container (5) ;
• the cartridge having :
- at least one channel (21) in which the solid microplastic particles (3) flow,
- one reservoir (20) connected fluidically to the channel (21) and configured to accumulate the solid microplastic particles (3) during the flow,
- at least one filter (24) situated downstream the reservoir (20), allowing the trapping of the solid microplastic particles (3) in the reservoir (20), by stopping the solid microplastic particles (3) in the reservoir (20) situated upstream the filter (24), and by letting the liquid sample exit without solid microplastic particles (3),
- an evacuation area (28) situated downstream the filter (24) and connected to an output (23) of the cartridge,
• pressure means (12) to circulate the liquid sample (4) in the cartridge (1) positioned on the cartridge loader (7) ;
• spectroscopy means (13) and/or imaging means (14) to analyse and/or to image the solid microplastic particles (3) accumulated in the reservoir (20) of the cartridge (1) loaded in a predefined position in the cartridge loader (7).

12. The device (2) of claim 11, wherein:
• imaging means (14) are a camera at the analysis area and are configured in order to acquire in real time, a series of images or videos for solid microplastic particles flowing and getting trapped into the reservoir, working in synchronization with the spectroscopy means (13), and
• the device (2) presents a dedicated software which analyses the acquired synchronized spectra and images/videos to map the evolution in the acquired spectra to the newly flowing particles into the reservoir with the help of the synchronized images/videos.

13. The device (2) of claims 11-12, wherein:
- the pressure means (12) are configured to sustain a continuous flow of the liquid sample, the cartridge (1) trapping the solid microplastic particles (3) in the analysis area,
wherein the spectroscopy (13) and imaging (14) means are configured to achieve, with a certain time step interval, a series of synchronous acquisitions of image frames and optical spectra, both information being triggered by the event of the arrival of new microplastic particle detected by the camera ;
- the identification and classification of a new solid microplastic particle is based on the differential comparison of the current spectrum to the precedent one acquired in the previous time step, and on the differential comparison of the current image to the precedent one acquired in the previous time step, those comparisons being done simultaneously for the purpose of taking into account the correlation between both information related to the same event ;
- the dedicated analysing software is configured for processing the series of images and spectra for the purpose of getting the information such as shape, size, colour and chemical nature of all newly arriving solid particles to the reservoir.

14. The device (2) of any of claims 11-13, wherein the spectroscopy means are configured to determine each solid microplastic particle which is composed of one of these types of plastics: PMMA, PS, PP, PE, PA, PVC, PTFE, PET, Nylon or others.

15. The device (2) of claims 11-14, wherein spectroscopy means (13) comprises Raman spectroscopy, FTIR spectroscopy, UV-Vis spectroscopy or Fluorescence spectroscopy analysis to determine the chemical nature of the solid microplastic particles during flow.

16. The device (2) of claims 11-15, wherein the information about the chemical nature is retrieved without any spectroscopy means, solely based on image analysis thanks to learning from a former dataset gathering both image and spectroscopy information and the correlation between both types of information.

17. Use of the device (2) as defined in claims 11-16, with a preconcentrated liquid sample (4) of water or liquid food or beverage, such as drinking water or sea water, with hundreds to thousands of solid microplastic solid particles (3) per ml pre-concentrated liquid sample (4) for 1 mL, advantageously hundreds to thousands of microplastic solid particles (3).
